# EUROPÄISCHE PATENTSCHRIFT

(11) **EP 0 545 976 B1**
(45) Veröffentlichungstag und Bekanntmachung des Hinweises auf die Patenterteilung: **26.01.1994**
(21) Anmeldenummer: 91914771.0
(22) Anmeldetag: 20.08.1991
(51) Int. Cl.: F02B 77/08

(54) **ÜBERWACHUNG DER FUNKTION EINES VON EINEM KATALYSIERBAREN FLUID DURCHSTRÖMBAREN KATALYSATORS**
MONITORING OF THE CATALYTIC ACTIVITY OF A CATALYTIC CONVERTER THROUGH WHICH A CATALYSABLE FLUID FLOWS
SURVEILLANCE DU FONCTIONNEMENT D'UN CATALYSEUR TRAVERSE PAR UN FLUIDE CATALYSABLE

(30) Priorität: 28.08.1990 DE 4027207; 15.10.1990 DE 4032721
(43) Veröffentlichungstag der Anmeldung: 16.06.1993
(73) Patentinhaber: Emitec Gesellschaft für Emissionstechnologie mbH, 53797 Lohmar (DE)
(72) Erfinder: MAUS, Wolfgang, D-5060 Bergisch Gladbach 1 (DE); SWARS, Helmut, D-5060 Bergisch Gladbach 1 (DE); BRÜCK, Rolf, D-5060 Bergisch Gladbach 1 (DE)
(74) Vertreter: Kahlhöfer, Hermann, Dipl.-Phys.
(86) Internationale Anmeldenummer: EP9101583
(87) Internationale Veröffentlichungsnummer: WO9203643

(56) Entgegenhaltungen:
- EP-A- 0 236 659
- EP-A- 0 383 187
- WO-A-90/06432
- DE-A- 2 351 828
- DE-A- 2 643 739
- DE-A- 3 710 268

## Beschreibung

Die Erfindung betrifft Verfahren zur Überwachung des Zustandes eines von einem katalysierbaren Fluid durchströmbaren Katalysators, z. B. eines Katalysators im Abgassystem einer Brennkraftmaschine, sowie Katalysatoren zur entsprechenden Verwendung, die zur Überwachung mit dem erfindungsgemäßen Verfahren besonders geeignet sind.

Entsprechend den in vielen Ländern immer strenger werdenden Umweltschutzvorschriften werden in zunehmendem Maße Brennkraftmaschinen, insbesondere Motore von Kraftfahrzeugen, mit Abgassystemen ausgestattet, die mit Katalysatoren zur Umsetzung von Schadstoffen in ihren Abgasen in unschädliche Stoffe versehen sind. Als "Katalysator" wird üblicherweise ein wabenähnlicher Körper aus Metall oder Keramik verstanden, der eine Vielzahl von Kanälen aufweist, die von Abgasen oder anderen Fluiden, die katalysierbare Bestandteile aufweisen, durchströmbar sind. Jeder Kanal weist dabei eine Wand auf, die mit einer Beschichtung aus katalytisch aktivem Material, dem Katalysator im eigentlichen Sinne, bedeckt ist. Metallische Katalysatoren werden im allgemeinen aus strukturierten Blechen geschichtet, spiralig aufgewickelt oder anderweitig verschlungen. Solche Formen sind beispielsweise in der EP 0 223 058 B2, der EP 0 245 737 B2 oder der EP 0 245 738 B2 beschrieben.

Zur Sicherstellung der Funktion eines Katalysators im Abgassystem einer Brennkraftmaschine ist es bekannt, den Katalysator mit Meßfühlern zur Temperaturüberwachung oder dergleichen zu versehen, um aus den erhaltenen Meßwerten Rückschlüsse auf seine Funktion beim Betrieb der Brennkraftmaschine ziehen zu können. Entsprechende Vorschläge sind der DE 26 43 739 Al, der DE 37 10 268 Al und der EP 0 236 659 Al zu entnehmen. In den beiden erstgenannten Schriften wird vorgeschlagen, einen Katalysator mit zumindest zwei Temperaturfühlern auszustatten, die an verschiedenen Orten des Katalysators, in Richtung des strömenden Abgases gesehen hintereinander, angeordnet sind. Die Meßfühler können dabei beide außerhalb des Katalysators, ein erster Fühler vor der Anströmseite des Katalysators und ein zweiter Fühler hinter der Abströmseite des Katalysators, angeordnet sein; auch führt die DE 26 43 739 Al aus, zumindest einen Meßfühler im Inneren des Katalysators vorzusehen. Beide Schriften schlagen weiterhin vor, aus den Meßsignalen der Fühler ein Signal zu bilden, das der Differenz der von den Meßfühlern ermittelten Temperaturen entspricht, und dieses Signal heranzuziehen zur Bewertung der Funktion des Katalysators. In der EP 0 236 659 Al wird ein Auswertesystem für die Signale der Meßfühler vorgestellt. Das Auswertesystem veranlaßt ein Warnsignal, falls die Temperaturdifferenz einen gewissen ersten Grenzwert überschreitet, und ein einen dauerhaften Schaden vorgebendes Signal, falls die Temperaturdifferenz einen deutlich über dem ersten Grenzwert liegenden zweiten Grenzwert übertrifft.

In der DE-26 43 739 Al wird weiterhin vorgeschlagen, zwei Temperaturmeßfühler im Bereich der Abströmseite des Katalysators dicht nebeneinander anzuordnen, wobei ein erster Fühler eine katalytisch aktive Oberfläche, ein zweiter Fühler jedoch eine katalytisch inaktive Oberfläche aufweist. Mit einer derartigen Meßanordnung läßt sich feststellen, ob das an den Meßfühlern vorbeiströmende Abgas noch umsetzbare Schadstoffe enthält; dies würde dazu führen, daß beide Meßfühler unterschiedliche Temperaturen signalisieren.

Zur Realisierung einer sicheren und zuverlässigen Funktionsüberwachung eines Katalysators im Hinblick auf Alterungs- und Vergiftungsvorgänge gibt der Stand der Technik nur wenige Hinweise. Insbesondere kann mit den bekannten Systemen keine Aussage über den Zustand (im Hinblick auf Alterung und/oder Vergiftung) eines insgesamt noch ausreichend funktionierenden Katalysators gemacht werden. Stets muß auch auf sehr indirekte Meßwerte zurückgegriffen werden, beispielsweise die Temperatur des zu katalysierenden Fluides vor Erreichen des Katalysators bzw. nach Durchquerung des Katalysators; auch kommen stets nur Meßwerte zur Auswertung, die punktuell an dem Katalysator gewonnen wurden und daher schon aufgrund der in aller Regel äußerst inhomogenen Beaufschlagung des Katalysators mit dem zu katalysierenden Fluid nur sehr begrenzt aussagekräftig sind. Auch sind die üblicherweise gewonnenen Meßwerte stark abhängig von der jeweiligen Beanspruchung des Katalysators; zur Gewinnung sicherer Aussagen über den Zustand des Katalysators müssen sie notwendigerweise anhand weiterer Daten analysiert werden. Solche Daten sind z. B. Informationen, die den Zustand des den Katalysator durchsetzenden Fluides angeben, die z. B. Temperatur, Strömungsgeschwindigkeit od Gehalt an katalysierbaren Komponenten.

Dementsprechend basiert die vorliegende Erfindung auf der Aufgabe, Verfahren zur Überwachung von Katalysatoren mittels Temperaturmessungen anzugeben, die möglichst unmittelbar und ohne Berücksichtigung weiterer Daten sichere Aussagen über die Funktionsfähigkeit des Katalysators ermöglichen. Auch sollen Katalysatoren angegeben werden, die zur Durchführung des erfindungsgemäßen Verfahrens besonders geeignet sind.

Erfindungsgemäß wird ein Verfahren zur Überwachung des Zustandes eines Katalysators, der entlang einer Strömungsrichtung von einem katalysierbaren Fluid, insbesondere einem Abgas aus einer Brennkraftmaschine, von einer Anströmseite zu einer Abströmseite durchströmt wird, angegeben, wobei
a) die Temperatur des Katalysators entlang der Strömungsrichtung durchgehend oder an mehreren Meßstellen unter Bildung eines Temperaturmittelwertes gemessen wird;
b) die Temperatur des Katalysators an mindestens einer Meßstelle unter Bildung eines zugehörigen Temperaturlokalwertes gemessen wird;
c) der Temperaturmittelwert mit dem Temperaturlokalwert zur Ableitung einer Aussage über den Zustand des Katalysators verglichen wird.

Die Erfindung gestattet erstmalig eine weitgehende Bewertung der Form der Temperaturverteilung im Inneren eines Katalysators, ohne daß ein Rückgriff auf absolute Temperaturmeßgrößen, die in erwähnter Weise stark abhängig sind vom jeweiligen Betriebszustand des Katalysators bzw. der Brennkraftmaschine, die dem Katalysator zugeordnet ist, erforderlich ist. Hierzu bestehen mehrere Möglichkeiten: ein Temperaturlokalwert kann beispielsweise in der Nähe der Anströmseite des Katalysators bestimmt werden; der Vergleich dieses Lokalwertes mit dem Temperaturmittelwert liefert eine Aussage, in welchem Bereich des Katalysators die katalytische Umsetzung in der Tat stattfindet. Findet die katalytische Reaktion in der Hauptsache in der Nähe der Abströmseite statt, so ist der Mittelwert etwa gleich dem Lokalwert, findet die Umsetzung bereits in der Nähe der Anströmseite statt, so sind Lokalwert und Mittelwert deutlich verschieden voneinander. Auch kann z. B. der Lokalwert in der Nähe der Abströmseite des Katalysators bestimmt werden; bei einer im wesentlichen in der Nähe der Abströmseite stattfindenden katalytischen Reaktion sind Mittelwert und Lokalwert stark verschieden voneinander, bei einer katalytischen Reaktion bereits in der Nähe der Anströmseite stimmen sie im wesentlichen überein. Auch so ergibt sich eine verläßliche Aussage über die Funktionsfähigkeit des Katalysators. Besonders interessant ist es beispielsweise, Temperaturlokalwerte sowohl im Bereich der Anströmseite als auch im Bereich der Abströmseite zu bilden. Dann können zunächst die soeben erwähnten Auswertungen miteinander kombiniert werden; darüber hinaus kann auch ein Vergleich des Temperaturmittelwertes mit dem Mittelwert der Lokalwerte erfolgen: findet die katalytische Reaktion bereits in der Nähe der Anströmseite statt, so ist der Temperaturmittelwert deutlich höher als der Mittelwert der Temperaturlokalwerte; hat der Katalysator seine Funktion weitgehend verloren, so verläuft die nur noch schwache katalytische Reaktion im wesentlichen gleichmäßig über die gesamte Länge des Katalysators, und entsprechend ist der Temperaturmittelwert gleich dem Mittelwert der Temperaturlokalwerte. Dementsprechend stellt der Quotient von Temperaturmittelwert und dem Mittelwert der Temperaturlokalwerte ein interessantes, zumindest in erster Näherung betriebsunabhängiges Kriterium zur Beurteilung der Funktionsfähigkeit des Katalysators dar.

Zur Erzielung eines weitestgehend betriebsunabhängigen Kriteriums zur Beurteilung der Funktionsfähigkeit des Katalysators können die Temperaturmessungen auch in der Weise durchgeführt werden, daß die Signale der Temperaturmeßfühler über ein Meßintervall annehmbarer Größe, beispielsweise ein Meßintervall von etwa einer Stunde oder mehreren Stunden Dauer, integriert werden. Auf diese Weise können Störungen der Messung unterdrückt werden, die von Meßsignalen herrühren, die während zeitlich instabiler Verhältnisse im Katalysator, wie sie z. B. bei einer Veränderung des katalysierbaren Fluides hinsichtlich chemischer Zusammensetzung, Scrömungsgeschwindigkeit oder Temperatur auftreten, aufgenommen wurden.

Das Verfahren nach der Erfindung kann vorteilhaft in der Weise ausgebildet sein, daß jede Temperaturmessung nicht in einem senkrecht zur Strömungsrichtung streng lokalisierten Bereich, sondern über ein ausgedehntes, senkrecht zur Strömungsrichtung erstrecktes Segment des Katalysators erfolgt. Auf diese Weise kann eine inhomogene Durchströmung des Katalysators in gewissem Umfang berücksichtigt werden, und es ergeben sich Meßwerte, die von der konkreten Art der Beaufschlagung des Katalysators unabhängig und somit von Katalysator zu Katalysator sicher reproduzierbar sind.

Im Rahmen einer vorteilhaften Weiterbildung des Verfahrens können Beeinträchtigungen der Zustandsüberprüfung vermieden werden, wie sie z. B. bei Lastwechseln einer Brennkraftmaschine auftreten. Bei einem Lastwechsel ändern sich Parameter wie chemische Zusammensetzung, Strömungsgeschwindigkeit und Temperatur des katalysierbaren Fluides; da der Katalysator eine gewisse thermische Trägheit aufweist, vergehen unter Umständen mehrere Sekunden, bis sich die Temperaturverteilung in dem Katalysator den veränderten Betriebsbedingungen angepaßt hat. Entsprechend können Messungen bei Lastwechseln unter Umständen zu fehlerhaften Aussagen hinsichtlich der Funktion des Katalysators führen. Um dies zu vermeiden, werden sowohl Temperaturmittelwert als auch Temperaturlokalwert jeweils über ein gewisses Zeitintervall bestimmt, und der zeitliche Verlauf der Meßwerte wird registriert. Die Ableitung einer Aussage über den Zustand des Katalysators wird nicht vorgenommen, soweit die zeitlichen Veränderungen von Temperaturmittelwert und Temperaturlokalwert nicht beide unterhalb eines vorgegebenen Grenzwertes liegen.

Um stets die Aktualität der Aussage über den Zustand des Katalysators zu gewährleisten, empfiehlt es sich, jede Temperaturmessung kontinuierlich oder, einer üblichen elektronischen Signalverarbeitung angepaßt, quasikontinuierlich vorzunehmen.

Die Erfindung betrifft auch einen Katalysator, der zur Überwachung im Rahmen des vorstehend erläuterten Verfahrens in besonderer Weise geeignet ist. Ein solcher erfindungsgemäßer Katalysator, der entlang einer Strömungsrichtung von einem katalysierbaren Fluid von einer Anströmseite zu einer Abströmseite durchströmbar ist, ist ausgestattet mit
a) einem ersten Temperaturmeßfühler, der aus einem Drahtstück mit einem temperaturveränderlichen elektrischen Widerstand besteht und entlang der Strömungsrichtung an den Katalysator gekoppelt ist;
b) mindestens einem zweiten Temperaturmeßfühler, der an einer Meßstelle an den Katalysator gekoppelt ist.

Ein solcher Katalysator ist besonders einfach herstellbar, z. B. indem das den ersten Temperaturmeßfühler bildende Drahtstück in einen Kanal des den Katalysator bildenden Wabenkörpers eingefädelt wird und der zweite Temperaturmeßfühler ebenfalls in einem Kanal des Wabenkörpers verankert wird. Wird der Wabenkörper aus Metallblechen durch Wicklung oder Verschlingung hergestellt, so können die Temperaturmeßfühler bei der Herstellung in den Katalysator eingearbeitet werden.

Das den ersten Temperaturmeßfühler bildende Drahtstück wird günstigerweise vor dem Einbringen in den Katalysator zu einer Haarnadelschleife geformt, damit die Induktivität des ersten Temperaturmeßfühlers gering gehalten werden kann und eventuelle Beeinträchtigungen des an den Katalysator anzuschließenden Meßsystems verhindert werden.

Mit Vorteil wird der erste Temperaturmeßfühler im Inneren des Katalysators angeordnet, im Falle eines Katalysators mit einer Mittellinie, die etwa parallel zur Strömungslinie ist, etwa parallel zur Mittellinie ausgerichtet oder, zur Erzielung einer gewissen Mittelung über Segmente des Katalysators senkrecht zur Strömungsrichtung, etwa schraubenförmig um die Mittellinie angeordnet. Dies kann bei den erwähnten Katalysatoren aus Metallblechen besonders einfach erfolgen, indem der erste Meßfühler bei der Wicklung oder Verschlingung in den Katalysator eingearbeitet wird.

Eine weitere vorteilhafte Weiterbildung des erfindungsgemäßen Katalysators ist dadurch gekennzeichnet, daß der erste Temperaturmeßfühler auf einer Mantelfläche des Katalysators, die die Anströmseite mit der Abströmseite verbindet, bzw. in der unmittelbaren Nähe der Mantelfläche im Inneren des Katalysators, angeordnet ist - im Falle der gebräuchlichen zylindrischen Katalysatoren ist die Mantelfläche genau der Zylindermantel. Wie anhand der Zeichnung noch näher erläutert werden wird, gestattet die Anordnung von Temperaturmeßfühlern auf oder in unmittelbarer Nähe der Mantelfläche in gewissem Umfang eine Lokalisierung des Segmentes des Katalysators, in dem die katalytische Reaktion größtenteils stattfindet. Die Temperaturmessung an der Mantelfläche, insbesondere die Temperaturmessung mit erstem Temperaturmeßfühler und auch zweitem Temperaturmeßfühler auf der Mantelfläche, bzw. in der unmittelbaren Nähe der Mantelfläche im Inneren des Katalysators, ermöglicht daher eine weitgehend betriebsunabhängige Beurteilung des Zustandes des Katalysators. Findet die katalytische Reaktion in der Nähe der Anströmseite statt, ist der Katalysator uneingeschränkt funktionsfähig, verlagert sich die katalytische Reaktion in die Nähe der Abströmseite, ist der Ausfall des Katalysators zu besorgen.

Eine vorteilhafte Ausbildung des zweiten Temperaturmeßfühlers ist ein etwa kreisförmig gebogenes oder spiralig gewickeltes, vorzugsweise als Haarnadelschleife ausgebildetes Drahtstück mit einem temperaturveränderlichen elektrischen Widerstand. Erster Temperaturmeßfühler und zweiter Temperaturmeßfühler sind somit gleich aufgebaut, und sie ermöglichen daher Messungen frei von systematischen Fehlern, die durch unterschiedliche Eigenschaften der Meßfühler bedingt werden.

Wie bereits erwähnt, kann ein zweiter Temperaturmeßfühler in der Nähe der Anströmseite und auch in der Nähe der Abströmseite angeordnet werden, wobei es besonders günstig ist, sowohl einen anströmseitigen zweiten Temperaturmeßfühler als auch einen abströmseitigen zweiten Temperaturmeßfühler vorzusehen. In jedem Fall ist es ratsam, die Position des zweiten Temperaturmeßfühlers am Anfang oder am Ende der durch den ersten Temperaturmeßfühler gegebenen Meßstrecke, die ihrerseits günstigerweise die gesamte Länge des Katalysators ist, vorzusehen. Bei einer Messung über den gesamten Katalysator ist eine Beurteilung des Zustandes des gesamten Katalysators in größtem Umfang möglich.

Die weitere Erläuterung der Erfindung erfolgt anhand der Zeichnung; die dargestellten Ausführungsbeispiele dienen lediglich der Illustration, ohne daß damit eine Einschränkung des beanspruchten Schutzes für die vorliegende Erfindung verbunden sein soll. Im einzelnen zeigen:
Figur 1 eine Anordnung mit Brennkraftmaschine, Abgassystem und Katalysator;
Figur 2 und Figur 3 Beispiele, wie erfindungsgemäß ein überwachbarer Katalysator mit Temperaturmeßfühlern realisiert werden kann;
Figur 4 eine Skizze der Temperaturverteilung im Inneren eines Katalysators während des Betriebs;
Figur 5 eine Skizze der Temperaturverteilung auf der Mantelfläche eines Katalysators während des Betriebs.

Zur Vereinfachung der Beschreibung sind gleichwirkende Komponenten in allen Figuren jeweils mit demselben Bezugszeichen versehen.

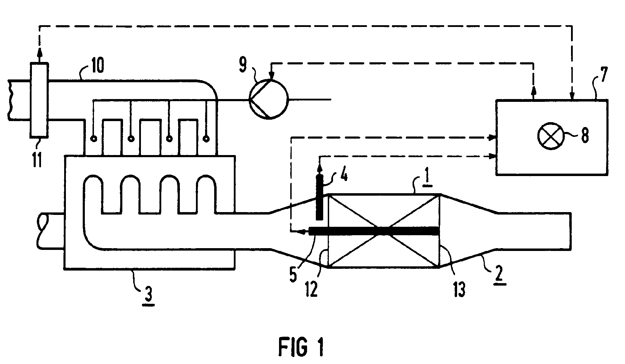

Figur 1 zeigt schematisiert eine Brennkraftmaschine 3 mit einem Abgassystem 2, in dem sich ein Katalysator 1 befindet. Der Katalysator 1 ist versehen mit Temperaturmeßfühlern 4 5, die beispielsweise Thermoelemente oder temperaturveränderiiche elektrische Widerstände sein können. Die Temperaturmeßfühler 4, 5 sind verbunden mit einem Maschinenüberwachungssystem 7, beispielsweise einer entsprechend erweiterten Motorsteuerungselektronik, die alle zum Betrieb der Brennkraftmaschine 3 notwendigen Meßdaten aufnimmt und weiterverarbeitet. In dem Maschinenüberwachungssystem 7 befindet sich die Vorrichtung, mit der beim Betrieb der Brennkraftmaschine 3 das erfindungsgemäße Verfahren zur Überwachung des Zustandes des von Abgas durchströmten Katalysators 1 durchgeführt wird. Die Aussage, die von dem Maschinenüberwachungssystem 7 z. B. im Falle eines ungenügenden, beispielsweise stark gealterten Zustandes des Katalysators 1 abzugeben ist, besteht in der Regel in der Aktivierung einer Anzeigevorrichtung 8, beispielsweise einer Kontrollampe. Es ist natürlich auch denkbar, die Aussage anderweitig weiterzuverarbeiten, im Extremfall beispielsweise den weiteren Betrieb der Brennkraftmaschine 3 vollständig zu unterbinden. Zur betrieblichen Steuerung der Brennkraftmaschine 3 erhält das Maschinenüberwachungssystem 7 von entsprechenden Gebern in der Brennkraftmaschine 3 die notwendigen Daten; in Figur 1 ist beispielhaft das Frischgassystem 10 zur Zuführung unverbrannter Luft zur Brennkraftmaschine 3 versehen mit einem Luftmengenmesser 11, der den Massendurchsatz der zur Brennkraftmaschine 3 strömenden Luft bestimmt und dem Maschinenüberwachungssystem 7 mitteilt. Weitere Meßaufnehmer sind der Einfachheit halber nicht dargestellt; insbesondere sind in der Regel Einrichtungen zur Messung der Betriebsfrequenz (bzw. der Drehzahl) der Brennkraftmaschine 3 usw. vorhanden. Die Steuerfunktionen des Maschinenüberwachungssystems 7 bestehen beispielsweise in der Kraftstoffzumessung; entsprechend ist die Kraftstoffpumpe 9 von dem Maschinenüberwachungssystem 7 beeinflußbar. Der Übersichtlichkeit halber nicht dargestellt ist ein Zündsystem für die Brennkraftmaschine 3; seine jeweilige Notwendigkeit liegt auf der Hand, so daß sich weitere Ausführungen hierzu erübrigen. In Figur 1 ist der Katalysator 1 versehen mit einem zweiten Temperaturmeßfühler 4, der vor der Anströmseite 12, wo die von der Brennkraftmaschine 3 abströmenden Abgase in den Katalysator 1 eintreten, angeordnet ist. Ein erster Temperaturmeßfühler 5 befindet sich im Inneren des Katalysators 1, im vorliegenden Beispiel in der Mitte. Ohne die Funktion des zweiten Temperaturmeßfühlers 4 wesentlich zu beeinträchtigen, könnte dieser auch im Inneren des Katalysators 1, vorzugsweise in der Nähe des Einströmendes 12, angeordnet sein. Der erste Meßfühler 5 erstreckt sich durch den Katalysator 1 von der Anströmseite 12 zu der Abströmseite 13. Auf seine konstruktive Auslegung und auf seine Einbindung in den Katalysator 1 kommt dabei weniger an; der erste Meßfühler 5 braucht nicht unbedingt in der Mitte des Katalysators 1 zu liegen, er braucht auch nicht gerade zu sein (beispielsweise wäre, je nach Konstruktion des Katalysators 1, eine spiralige Ausführung denkbar). Im übrigen sind wie im dargestellten Fall Temperaturmeßfühler 4, 5 mit gewissen räumlichen Ausdehnungen senkrecht zur Richtung des strömenden Abgases durchaus vorteilhaft. Im allgemeinen ist die Beaufschlagung eines Katalysators 1 mit Abgas senkrecht zur Strömungsrichtung des Abgases deutlich inhomogen, und durch Verwendung "ausgedehnter" Temperaturmeßfühler 4, 5 werden Aussagen über die über gewisse Bereiche des Katalysators 1 gemittelten Verhältnisse erzielt, die besser als Aussagen über räumlich streng begrenzte Verhältnisse reproduzierbar und übertragbar sind. Senkrecht zur Strömungsrichtung des Abgases ausgedehnte Temperaturmeßfühler 4, 5 sind einfach realisierbar in Katalysatoren 1 mit wabenähnlichen Trägerkörpern, die in bekannter Weise aus Metallblechen gewickelt oder verschlungen sind: die Widerstandsdrähte zur Bildung der Temperaturmeßfühler 4, 5 werden vor der Wicklung oder Verschlingung einfach zwischen die Bleche gelegt.

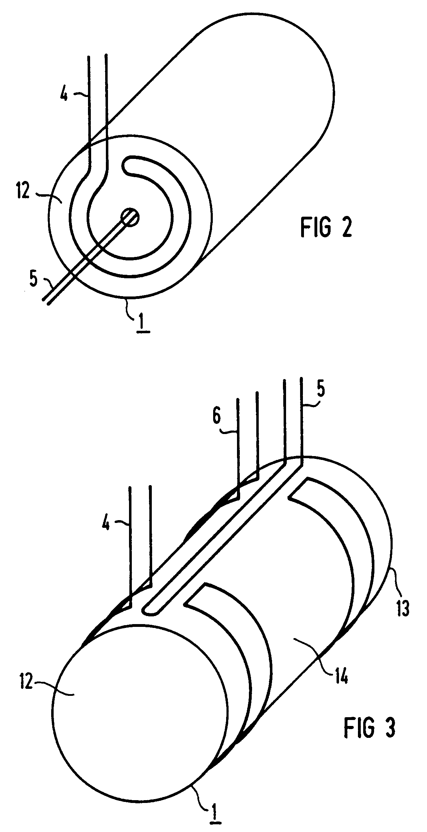

Figur 2 zeigt eine spezielle Ausbildung des in Figur 1 schematisch dargestellten Katalysators 1. Beide Temperaturmeßfühler 4, 5 sind ausgeführt als schleifenförmige Widerstandsdrähte, deren elektrischer Widerstand jeweils temperaturabhängig ist. Ein zweiter Temperaturmeßfühler 4 ist auf die Anströmseite 12 des Katalysators 1 aufgelegt und dort befestigt, oder anderweitig in unmittelbare Nähe der Anströmseite 12 gebracht. Der erste Meßfühler 5 verläuft im Inneren des Katalysators 1.

Eine prinzipiell den Konfigurationen gemäß Figur 1 und Figur 2 ähnelnde Ausführung eines Katalysators 1 mit Temperaturmeßfühlern 4, 5, 6 ist dargestellt in Figur 3. Zunächst befindet sich der erste Temperaturmeßfühler 5 nicht im Inneren des Katalysators 1, sondern er ist auf der Mantelfläche 14 aufgebracht. Gleiches gilt für einen nahe der Anströmseite 12 angebrachten zweiten Temperaturmeßfühler 4 und einen nahe der Abströmseite 13 angeordneten zweiten Temperaturmeßfühler 6. Die Ausführung gemäß Figur 3 ist besonders günstig deshalb, weil sie keine Veränderungen im Inneren des Katalysators 1 erfordert; sie ist besonders vorteilhaft bei einem Katalysator 1 mit metallischem Trägerkörper, der üblicherweise ohnehin ein festes Mantelrohr aufweist, dessen Außenfläche die Mantelfläche 14 bildet. Auf einem solchen Katalysator 1 sind Widerstandsdrähte leicht befestigbar und, im Falle der Beschädigung, leicht austauschbar. Die zweiten Temperaturmeßfühler 4 und 6 sind jeweils in der Nähe eines Endes des Katalysators 1 auf der Mantelfläche 14 aufgewickelt. Für alle drei Temperaturmeßfühler 4, 5, 6 sind einfache Haarnadelschleifen von Widerstandsdrähten gezeigt; die Haarnadelschleifen können selbstverständlich durch anderweitige Wicklungen, insbesondere dann, wenn größere Drahtlängen erforderlich sind, ersetzt werden, ohne daß damit eine Beeinträchtigung der Funktion verbunden wäre.

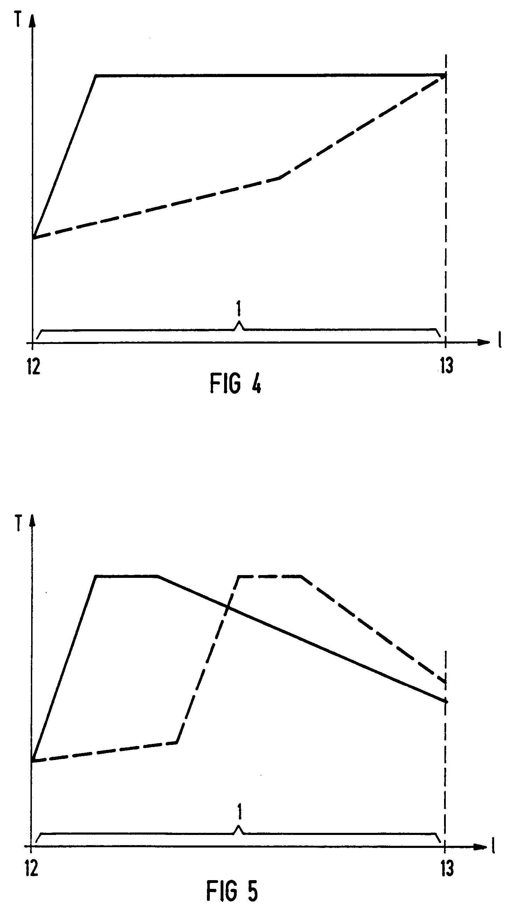

In Figur 4 ist die Temperaturverteilung im Inneren eines Katalysators 1 bei stationärem Betrieb dargestellt. Auf der Abszisse ist der von der Anströmseite 12 zur Abströmseite 13 durch den Katalysator 1 verlaufende Weg dargestellt, entlang der Ordinate wird die jeweilige Temperatur eingetragen. Die Temperatur des in den Katalysator 1 einströmenden Abgases muß einen Wert haben, der oberhalb der Mindesttemperatur, die zum Betrieb des Katalysators 1 erforderlich ist, liegt. Der durchgezogene Graph stellt den Verlauf der Temperatur für einen relativ neuen Katalysator 1 dar. Die Temperatur steigt unmittelbar hinter der Anströmseite 12 (entsprechend dem Nullpunkt im Diagramm) sehr rasch an und erreicht alsbald einen Maximalwert, der, entsprechend der Wärmeleitfähigkeit des Katalysators 1 und dem durch das strömende Abgas vermittelten Wärmetransport, bis zur Abströmseite 13 etwa konstant bleibt.

Der gestrichelte Graph stellt den Temperaturverlauf für einen stark gealterten Katalysator 1 dar. Von der Anströmseite 12 weg steigt die Temperatur nur langsam an; die Aktivität der Bereiche im Katalysator 1 unmittelbar hinter der Anströmseite 12 ist sehr stark abgesunken, ganz verschwindet sie allerdings nicht. Erst in Bereichen in der Nähe der Abströmseite 13 tritt aufgrund noch vorhandener Aktivität einen deutliche Temperaturerhöhung ein. Im Rahmen einer Anordnung von Temperaturmeßfühlern in Form von Widerstandsdrähten gemäß Figur 1 oder Figur 2 würde der zweite Temperaturmeßfühler 4 die Temperatur des Katalysators an der Anströmseite 12 messen; der erste Meßfühler 5 mißt einen über die gesamte Länge des Katalysators 1 gemittelten Wert für die Temperatur, entsprechend dem Integral des in Figur 6 dargestellten Graphen. Ist der Katalysator 1 voll funktionsfähig, so würden zweiter Temperaturmeßfühler 4 und erster Temperaturmeßfühler 5 deutlich voneinander abweichende Temperaturen messen. Ist die Alterung des Katalysators 1 fortgeschritten, so mißt der erste Meßfühler 5 im wesentlichen dieselbe Temperatur wie der zweite Meßfühler 4. Die somit auftretende Temperaturdifferenz ist ein Maß für die Alterung des Katalysators 1; sie ist zunächst hoch und sinkt, wenn der Katalysator 1 über seine Länge an Aktivität verliert, ab - im Extremfall, wenn der Katalysator 1 seine Aktivität vollständig verloren hat, liegt keine Temperaturdifferenz mehr vor. Der Zustand des Katalysators 1 muß alsbald als unzureichend angesehen werden, wenn die - ggf. auf Einflüsse durch den speziellen Betriebszustand der Brennkraftmaschine korrigierte - Temperaturdifferenz einen vorzugebenden Grenzwert unterschreitet. Mit einem in der Nähe der Abströmseite 13 angeordneten zweiten Temperaturmeßfühler 4 ist eine Funktionsüberprüfung des Katalysators 1 ebenfalls möglich; ist der Katalysator 1 im wesentlichen voll funktionsfähig, so würden ein derartiger zweiter Temperaturmeßfühler 4 und der erste Temperaturmeßfühler 5 im wesentlichen gleiche Temperaturen messen. Mit fortschreitender Alterung des Katalysators 1 mißt der erste Meßfühler 5 eine deutlich geringere Temperatur als der an der Abströmseite 13 befindliche zweite Meßfühler 4. Die somit auftretende Temperaturdifferenz ist ebenfalls ein Maß für die Alterung und/oder Vergiftung des Katalysators 1; sie ist zunächst gering, steigt mit zunehmender Benutzung an und sinkt schließlich, wenn der Katalysator 1 über seine gesamte Länge an Aktivität verloren hat, wieder abschließlich, bei vollständigem Verlust der Aktivität, liegt keine Temperaturdifferenz mehr vor. Entsprechend ist der Zustand des Katalysators 1 alsbald dann als unzureichend anzusehen, wenn die ggf. auf betriebsabhängige Einflüsse korrigierte Temperaturdifferenz ihr Maximum durchlaufen hat.

Figur 5 zeigt den Temperaturverlauf auf der Mantelfläche eines Katalysators 1, wobei die Art der Darstellung dieselbe ist wie in Figur 4. Wesentlich ist, daß die Temperatur nach dem Erreichen ihres Maximums nicht im wesentlichen konstant bleibt, sondern hinter der Zone des Katalysators 1, in der die katalytische Reaktion hauptsächlich stattfindet, wieder abnimmt. Dies ist in erster Linie auf Wärmeverluste durch Strahlung zurückzuführen; hinter der aktiven Zone findet keine Wärmeentwicklung mehr statt, so daß die dort abgestrahlte Wärme nicht wieder ersetzt werden kann. Entsprechend kann eine Uberwachung auch in der Weise erfolgen, daß die Lage der Zone höchster Temperatur auf der Mantelfläche, oder in deren Nähe im Inneren des Katalysators 1, bestimmt wird. Dies erfolgt im Rahmen der Erfindung beispielsweise mit einer Anordnung gemäß Figur 3.

Durch die Erfindung werden Möglichkeiten zur Überwachung eines von einem katalysierbaren Fluid durchströmbaren Katalysators mittels Temperaturmessungen angegeben, die in unkomplizierter Weise die Auswertung von Temperaturverteilungen gestatten, die in wesentlich geringerem Maße als lokalisierte Temperaturmeßwerte von den konkreten Betriebsbedingungen des Katalysators abhängig sind und somit aufwendige Maßnahmen zur Auswertung der Messungen entbehrlich machen.

## Patentansprüche

1. Verfahren zur Überwachung des Zustandes eines Katalysators (1), der entlang einer Strömungsrichtung von einem katalysierbaren Fluid, insbesondere einem Abgas aus einer Brennkraftmaschine (3), von einer Anströmseite (12) zu einer Abströmseite (13) durchströmt wird, dadurch gekennzeichnet,daß
a) die Temperatur des Katalysators (1) entlang der Strömungsrichtung durchgehend oder an mehreren Meßstellen unter Bildung eines Temperaturmittelwertes gemessen wird;
b) die Temperatur des Katalysators an mindestens einer Meßstelle unter Bildung eines zugehörigen Temperaturlokalwertes gemessen wird;
c) der Temperaturmittelwert mit dem Temperaturlokalwert zur Ableitung einer Aussage über den Zustand des Katalysators (1) verglichen wird.

2. Verfahren nach Anspruch 1, wobei jede Temperaturmessung unter Mittelwertbildung über ein dünnes, senkrecht zur Strömungsrichtung erstrecktes Segment des Katalysators (1) erfolgt.

3. Verfahren nach Anspruch 1 oder 2, wobei
a) der Temperaturmittelwert,und der Temperaturlokalwert über ein Zeitintervall bestimmt werden;
b) die zeitlichen Veränderungen von Temperaturmittelwert und Temperaturlokalwert überwacht werden;
c) die Aussage über die Funktion des Katalysators (1) nur dann abgeleitet wird, wenn die zeitlichen Veränderungen von Temperaturmittelwert und Temperaturlokalwert unterhalb eines vorgegebenen Grenzwertes liegen.

4. Verfahren nach Anspruch 3, wobei jede Temperaturmessung kontinuierlich oder quasi-kontinuierlich erfolgt.

5. Katalysator (1) zur Durchführung des Verfahrens nach einem der Ansprüche 1 bis 4, der entlang einer Strömungsrichtung von einem katalysierbaren Fluid von einer Anströmseite (12) zu einer Abströmseite (13) durchströmbar ist, gekennzeichnet durch
a) einen ersten Temperaturmeßfühler (5), der aus einem Drahtstück mit einem temperaturveränderlichen elektrischen Widerstand besteht und entlang der Strömungsrichtung an den Katalysator (1) gekoppelt ist;
b) mindestens einen zweiten Temperaturmeßfühler (4, 6), der an einer Meßstelle an den Katalysator (1) gekoppelt ist.

6. Katalysator (1) nach Anspruch 5, wobei das Drahtstück des ersten Temperaturmeßfühlers (5) zu einer Haarnadelschleife geformt ist.

7. Katalysator (1) nach Anspruch 5 oder 6, wobei der erste Temperaturmeßfühler (5) in dem Katalysator (1) angeordnet ist.

8. Katalysator (1) nach Anspruch 7, der eine Mittellinie aufweist, die etwa parallel zur Strömungsrichtung ist, wobei der erste Temperaturmeßfühler (5) etwa parallel zur Mittellinie oder etwa schraubenförmig um die Mittellinie angeordnet ist.

9. Katalysator (1) nach Anspruch 5 oder 6, mit einer Mantelfläche (14), die die Anströmseite (12) mit der Abströmseite (13) verbindet, wobei der erste Temperaturmeßfühler (5) auf der Mantelfläche (14) oder in deren unmittelbarer Nähe im Inneren des Katalysators (1) angeordnet ist.

10. Katalysator (1) nach Anspruch 9, wobei der zweite Temperaturmeßfühler (4, 6) auf der Mantelfläche (14) oder in deren unmittelbarer Nähe im Inneren des Katalysators (1) angeordnet ist.

11. Katalysator (1) nach einem der Ansprüche 5 bis 10, wobei der zweite Temperaturmeßfühler (4, 6) aus einem etwa spiralig gewickelten, vorzugsweise zu einer Haarnadelschleife gebogenen, Drahtstück mit einem temperaturveränderlichen elektrischen Widerstand besteht.

12. Katalysator (1) nach einem der Ansprüche 5 bis 11, wobei ein anströmseitiger zweiter Temperaturmeßfühler (4) in der Nähe der Anströmseite (12) angeordnet ist.

13. Katalysator (1) nach einem der Ansprüche 5 bis 12, wobei ein abströmseitiger zweiter Temperaturmeßfühler (6) in der Nähe der Abströmseite (13) angeordnet ist.

14. Katalysator (1) nach einem der Ansprüche 5 bis 13, wobei der erste Temperaturmeßfühler (5) im wesentlichen von der Anströmseite (12) bis zu der Abströmseite (13) erstreckt ist.

## Claims

1. Method for monitoring the state of a catalyst (1) through which a catalysable fluid, in particular an exhaust gas from an internal combustion engine (3), flows along a flow direction from an upstream side (12) to a downstream side (13), characterised in that
a) the temperature of the catalyst (1) along the flow direction is measured continuously, or at a plurality of measuring sites, establishing an average temperature;
b) the temperature of the catalyst is measured at at least one measuring site, establishing the local temperature associated therewith;
c) the average temperature is compared to the local temperature measurement in order to produce a forecast for the state of the catalyst (1).

2. Method according to claim 1, whereby every temperature measurement is done by an averaging process over a thin segment of the catalyst (1) which extends perpendicularly with respect to the flow direction.

3. Method according to claim 1 or 2, whereby
a) the average temperature and the local temperature are determined over a period of time;
b) the periodic changes in the average temperature and local temperature are monitored;
c) the forecast for the operation of the catalyst (1) is only produced when the periodic changes of the average temperature and the local temperature are below a previously given limit.

4. Method according to claim 3, whereby each temperature measurement is done continually or virtually continually.

5. Catalyst (1) for carrying out the method according to one of claims 1 to 4, through which a catalysable fluid flows in a flow direction from an upstream side (12) to a downstream side (13), characterised in that
a) a first temperature sensor (5) which is composed of a wire with an electrical resistance which is altered by temperature and is coupled to the catalyst (1) along the direction of the flow;
b) at least one second temperature sensor (4, 6) is coupled at a measuring site on the catalyst.

6. Catalyst (1) according to claim 5, whereby the wire of the first temperature sensor (5) is shaped as a hairpin loop.

7. Catalyst (1) according to claim 5 or 6, whereby the first temperature sensor (5) is arranged in the catalyst (1).

8. Catalyst (1) according to claim 7, which is provided with a centre line which is approximately parallel to the flow direction, whereby the first temperature sensor (5) is arranged approximately parallel to the centre line or is arranged approximately helically about the centre line.

9. Catalyst (1) according to claim 5 or 6, with a lateral surface (14) which connects the upstream side (12) to the downstream side (13), whereby the first temperature sensor (5) is arranged on the lateral surface (14) or directly adjacent thereto in the interior of the catalyst (1).

10. Catalyst (1) according to claim 9, whereby the second temperature sensor (4, 6) is arranged on the lateral surface (14) or directly adjacent thereto on the interior of the catalyst (1).

11. Catalyst (1) according to one of claims 5 to 10, whereby the second temperature sensor (4, 6) is composed of an approxiamtely spirally wound wire, preferably bent into a hairpin loop, with an electrical resistance which is variable according to temperature.

12. Catalyst (1) according to one of claims 5 to 11, whereby an upstream side second temperature sensor (4) is arranged adjacent to the upstream side (12).

13. Catalyst (1) according to one of claims 5 to 12, whereby a downstream side second temperature sensor (6) is arranged adjacent to the downstream side (13).

14. Catalyst (1) according to one of claims 5 to 13, whereby the first temperature sensor (5) is extended substantially from the upstream side (12) to the downstream side (13).

## Revendications

1. Procédé de surveillance de l'état d'un catalyseur (1) traversé le long d'une direction de flux, depuis un côté d'entrée de flux (12) jusqu'à un côté de sortie de flux (13), par un fluide catalysable, en particulier un gaz d'échappement provenant d'une machine à combustion (3), caractérisé en ce que :
(a) l'on mesure la température du catalyseur (1) le long de la direction de flux de façon continue ou en plusieurs points de mesure sous forme d'une valeur moyenne de température ;
(b) l'on mesure la température du catalyseur en au moins un point de mesure sous forme d'une valeur locale de température correspondante ;
(c) l'on compare la valeur moyenne de température à la valeur locale de température pour élaborer un message sur l'état du catalyseur (1).

2. Procédé selon la revendication 1, dans lequel chaque mesure de température sous forme de valeur moyenne est effectuée sur un segment mince du catalyseur (1) s'étendant perpendiculairement à la direction de flux.

3. Procédé selon la revendication 1 ou 2, dans lequel :
(a) on détermine sur un intervalle de temps la valeur moyenne de température et la valeur locale de température ;
(b) on surveille la modification dans le temps de la valeur moyenne de température et de la valeur locale de température ;
(c) on n'élabore alors le message sur le fonctionnement du catalyseur (1) que si la modification dans le temps de la valeur moyenne de température et de la valeur locale de température se situe à l'intérieur d'une valeur limite prédéterminée.

4. Procédé selon la revendication 3, dans lequel chaque mesure de température est effectuée de façon continue ou quasi-continue.

5. Catalyseur (1) pour la mise en oeuvre du procédé selon l'une des revendications 1 à 4, traversable le long d'une direction de flux, depuis un côté d'entrée de flux (12) jusqu'à un côté de sortie de flux (13), par un fluide catalysable, caractérisé par:
(a) un premier capteur de mesure de température (5), formé par une portion de fil dont la résistance électrique varie avec la température et couplé au catalyseur (1) le long de la direction de flux ;
(b) au moins un second capteur de mesure de température (4, 6), couplé au catalyseur (1) en un point de mesure.

6. Catalyseur (1) selon la revendication 5, dans lequel la portion de fil du premier capteur de mesure de température (5) a la forme d'une boucle en épingle à cheveux.

7. Catalyseur (1) selon la revendication 5 ou 6, dans lequel le premier capteur de mesure de température (5) est disposé dans le catalyseur (1).

8. Catalyseur (1) selon la revendication 7, comportant une ligne médiane approximativement parallèle à la direction de flux, dans lequel le premier capteur de mesure de température (5) est disposé approximativement parallèlement à la ligne médiane ou approximativement sous forme d'une hélice entourant la ligne médiane.

9. Catalyseur (1) selon la revendication 5 ou 6, comportant une surface de manchon (14) reliant le côté d'entrée de flux (12) au côté de sortie de flux (13), dans lequel le premier capteur de mesure de température (5) est disposé sur la surface de manchon (14) ou à l'intérieur du catalyseur (1) au voisinage immédiat de cette dernière.

10. Catalyseur (1) selon la revendication 9, dans lequel le second capteur de mesure de température (4, 6) est disposé sur la surface de manchon (14) ou à l'intérieur du catalyseur (1) au voisinage immédiat de cette dernière.

11. Catalyseur (1) selon l'une des revendications 5 à 10, dans lequel le second capteur de mesure de température (4, 6) est formé par une portion de fil dont la résistance électrique varie avec la température et qui est enroulée approximativement en spirale, de préférence coudée en une boucle en épingle à cheveux.

12. Catalyseur (1) selon l'une des revendications 5 à 11, dans lequel un second capteur de mesure de température côté arrivée de flux (4) est disposé au voisinage du côté d'arrivée de flux (12).

13. Catalyseur (1) selon l'une des revendications 5 à 12, dans lequel un second capteur de mesure de température côté sortie de flux (6) est disposé au voisinage du côté de sortie de flux (12).

14. Catalyseur (1) selon l'une des revendications 5 à 13, dans lequel le premier capteur de mesure de température (5) s'étend dans son ensemble depuis le côté d'entrée de flux (12) jusqu'au côté de sortie de flux (13).
